(19) Europäisches Patentamt / European Patent Office / Office européen des brevets

(11) **EP 2 193 480 B1**

(12) **EUROPEAN PATENT SPECIFICATION**

(45) Date of publication and mention
of the grant of the patent:
**09.08.2017 Bulletin 2017/32**

(51) Int Cl.:
***G06K 19/07*** *(2006.01)*

(21) Application number: **08787540.7**

(22) Date of filing: **28.08.2008**

(86) International application number:
**PCT/EP2008/061300**

(87) International publication number:
**WO 2009/027464 (05.03.2009 Gazette 2009/10)**

(54) **TRANSPONDER BACK SCATTER MODULATOR WITH REGULATED MODULATION DEPTH**

TRANSPONDER-RÜCKSTREUMODULATOR MIT GEREGELTER MODULATIONSTIEFE

MODULATEUR DE RÉTRODIFFUSION DE TRANSPONDEUR À PROFONDEUR DE MODULATION RÉGULÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.08.2007 DE 102007040855**
**26.12.2007 US 16764 P**

(43) Date of publication of application:
**09.06.2010 Bulletin 2010/23**

(73) Proprietor: **TEXAS INSTRUMENTS DEUTSCHLAND GMBH**
**85356 Freising (DE)**

(72) Inventor: **GANZ, Ruediger**
**85354 Freising (DE)**

(74) Representative: **Zeller, Andreas et al**
**Texas Instruments Deutschland GmbH**
**Haggertystraße 1**
**85356 Freising (DE)**

(56) References cited:
**WO-A-01/63743          US-A1- 2005 254 594**
**US-B1- 6 427 065**

**Description**

The present invention generally relates to an RFID transponder. More particularly, the present invention relates to an RFID transponder with back scatter modulation.

RFID transponder circuits are widely used in many different applications and are becoming ever more reduced in size, due to finding popular application in tagging and "electronic passports". The antenna voltage of an RFID transponder has to be limited in order to avoid damage due to electrical overstress. The threshold for the limitation is determined by the capabilities of the integrated circuit used in the transponder. Modern deep sub micron processes with a minimum gate length of, e.g. 130 nm or less, are needed for transponder design to integrate more functionality such as larger memories and higher digital gate densities. A disadvantage of these deep sub micron processes is that the voltage resistivity of the devices used in such processes is dramatically reduced. A consequence of the reduced performance in terms of supply voltage in current technologies is that the antenna voltage has to be limited to 3V or below, which results in a reduced operating voltage range for the whole analog front end and digital circuits. A further reduction of the analog front end supply exists due to the voltage drop of the rectifier circuits in such transponders. The rectifier generates the supply of the whole transponder by rectifying the antenna voltage. The voltage drop over the rectifier, together with the reduced limiter threshold of 3V, results in a supply voltage of only about 2.5V, whereas former designs with a limiter threshold of 7V were able to operate at 6V, for a minimum distance between the transponder and read write R/W unit.

In former transponder designs, uplink back scatter modulation was achieved by switching a resistive load in parallel to the antenna and, for strong fields, the antenna limiter threshold was additionally reduced. However, this method of modulating back scatter is not possible for up-to-date transponder designs, since, although acceptable for the high antenna and supply voltage ranges previously used, it tends to induce additional voltage drops to the antenna voltage and can draw the supply voltage out of the limited ranges of current RFID transponders. Document WO 01/63743 A2 discloses such a modulation circuit for a transponder. It is an object of the present invention to provide a modulation circuit for a transponder according to claim 1 in which a precise modulation of the back scatter load can be achieved.

Accordingly, the present invention provides an RFID transponder including an antenna and modulation circuitry for back scatter modulation at a local voltage rail connected to the antenna such that a voltage of the antenna is maintained within a predetermined range. The modulation circuitry includes a voltage regulation loop including a rectifier connected between the antenna and the local voltage rail for rectifying a voltage from the antenna so as to load the local voltage rail with the rectified voltage from the antenna. There is an error amplifier for comparing a voltage at the local voltage rail with a modulation voltage and producing an output signal. A switch is provided for switching the modulation voltage between a first reference voltage level and a second reference voltage level. A regulated load is coupled between the output of the error amplifier and the antenna, which is varied in response to the error amplifier output signal. Basically, this provides a regulated load to the antenna, which is controlled on the basis of a data stream to be transmitted using, for example, amplitude shift keying (ASK). The error amplifier compares the antenna voltage with the modulation voltage level, which is derived either from the first reference voltage level or the second reference voltage level. The resultant output voltage of the amplifier is used to control the voltage at the local voltage rail so that it complies with the modulation voltage. In order to obtain the required modulation depth, the first and second reference voltage levels can be adjusted. If the second reference voltage is greater than the first reference voltage level and the second reference voltage is connected to the error amplifier via the switch, then only minor or no additional damping occurs. If the first reference level is used as modulation voltage, the antenna voltage will be pulled down with the regulated load until the local voltage rail is equal to the reference voltage level. The back scatter modulation circuitry is therefore able to work with a dramatically reduced antenna limiter threshold and the modulation depth is controlled by a voltage regulation loop so that a precise and constant modulation depth is achieved independently of the field strength. Since a precise regulation of the antenna voltage can be obtained even at low antenna and supply voltages, the modulation circuitry of the present invention can easily be implemented in a deep sub-micron process.

In an advantageous implementation, the second reference voltage level can be the supply voltage level. Then the local voltage level can have a value fitting to the chip supply. The rectifier is an additional second, rather simple rectifier with respect to the main rectifier used for rectifying the limited antenna voltage, in order to provide an internal supply voltage for the transponder. As such, the rectifier preferably comprises first and second diodes connected in parallel with each other in a forward bias direction from the antenna to the local voltage rail. The voltage drop across each of the diodes may then advantageously correspond to the voltage drop the supply voltage undergoes in the main rectifier, so that the voltage at the local voltage rail is practically equal to the supply voltage level. Therefore, no additional load must be coupled to the antenna if the supply voltage level is used as modulation voltage.

The regulated load can comprise a first damping transistor connected between a first antenna terminal and ground and a second damping transistor connected between a second antenna terminal and ground. Gate terminals of the first and second transistors are then connected to the output of the amplifier, so that they are operable to receive an output signal from the amplifier. The amplifier output signal (the difference between the voltage at the local voltage rail and the modulation voltage) then controls the transistors to provide a load to the antenna so that the voltage at the local voltage rail is lowered until it is the same as the reference voltage. When the supply voltage level is used as the modulation voltage, the damping transistors may basically remain idle, so that no additional current is drawn from the antenna.

The present invention also provides a method of modulating backscatter in an RFID transponder. A rectified voltage level of an antenna at a local voltage rail is monitored and a difference of the rectified voltage level with a modulation voltage level is determined. Then the modulation voltage level is varied between a first reference voltage level and a second reference voltage level in accordance with data to be transmitted. Finally, a load coupled to the antenna is controlled, in a way so as to increase or decrease the load based on the determined difference between the modulation voltage level and the rectified antenna voltage until the rectified voltage level is equal to the modulation voltage level. The method according to the invention achieves regulation of the voltage at the antenna and thus modulates the backscatter at the antenna. The method of back scatter modulation of the present invention is able to work with a dramatically reduced antenna limiter threshold and controls the modulation depth by a voltage regulation loop so that a precise and constant modulation depth is achieved independently of the field strength. The modulation depth can be adjusted by adjusting the reference voltage levels. A precise regulation of the antenna voltage can be obtained even at low antenna and supply voltages, which provides the advantage that the method of the present invention can easily be used in a deep sub-micron process. If one of the reference voltage levels is the internal supply voltage, the regulated load can basically be turned off.

Further advantages and characteristics of the invention ensue from the description below of a preferred embodiment, with reference to the accompanying drawing, in which:

- Figure 1 is a graph of the magnitude of the peak transponder voltage as a function of the distance of the transponder from a read/write unit for an RFID transponder;

- Figure 2 is a schematic block diagram of an RFID transponder; and

- Figure 3 is a simplified circuit diagram of the uplink stage of an RFID transponder according to the invention.

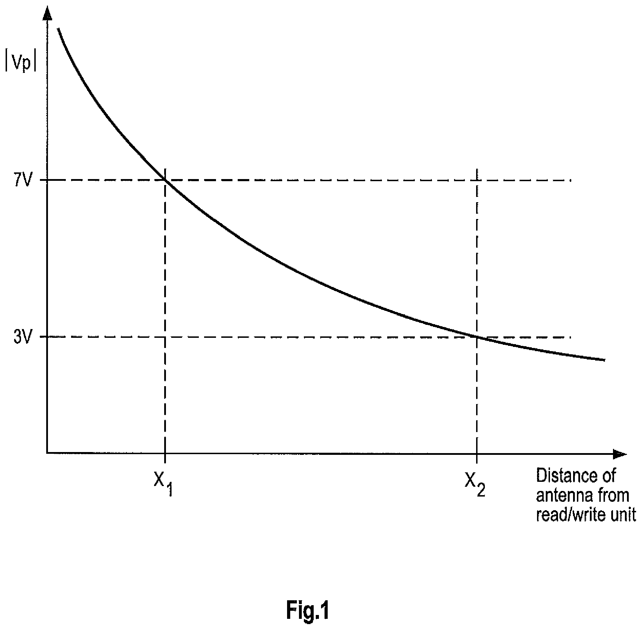

Figure 1 is a graph of the magnitude of the peak transponder voltage as a function of the distance of the transponder from a read/write unit for an RFID transponder. The modulus (magnitude) of the peak voltage of RFID transponders as a function of the distance of the transponder (antenna) from the read/write (R/W) unit is shown in Figure 1, with specific distances $X_1$ and $X_2$ being indicated for former and up-to-date transponders, respectively. For example, present devices are able to withstand voltages of up to 3V, whereas former designs used integrated circuits that were able to withstand 8V. The rectifier generates the supply of the whole transponder by rectifying the antenna voltage. The voltage drop over the rectifier, together with the reduced limiter threshold of 3V, results in a supply voltage of only about 2.5V when the maximum distance of the transponder away from the R/W unit $X_2$ is 30cm, for example, whereas former designs with a limiter threshold of 7V were able to operate at 6V, for a maximum distance between the transponder and R/W unit $X_1$ of about 10cm, for example.

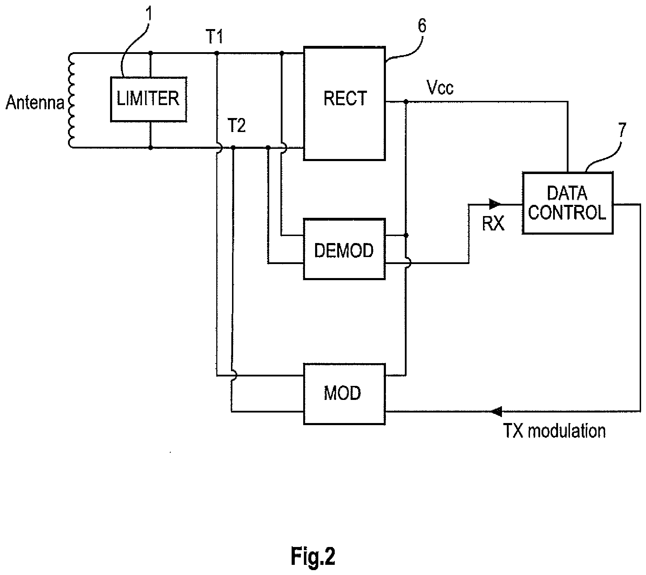

Figure 2 shows both the uplink and downlink stages of an RFID transponder. An antenna Antenna is connected in parallel between two terminals T1 and T2, with voltage limiting circuitry 1 connected in parallel between the two terminals T1 and T2. The terminals T1 and T2 are connected to the outputs of a modulating stage MOD and the inputs of a demodulating stage DEMOD, and also to the inputs of a rectifier 6. The limiting circuitry 1 is operable to limit the antenna voltage, which is then rectified by the rectifier 6 to provide an internal supply voltage for the transponder at a voltage rail Vcc connected to the output of the rectifier 6. The voltage rail Vcc is connected to one input of the demodulating stage DEMOD and one input of the modulating stage MOD, as well as to one input of a data control stage 7. The output of the demodulating stage is an output signal RX, which is fed to another input of the data control stage 7 and the output of the data control stage 7 is an output signal TX modulation, which is fed to another input of the modulating stage MOD. The limiting circuitry 1, rectifier 6 and demodulating stage DEMOD form the downlink stage of the transponder, whereas the modulating stage MOD forms the uplink stage of the transponder. The present invention is only concerned with the uplink stage, which is described in more detail below.

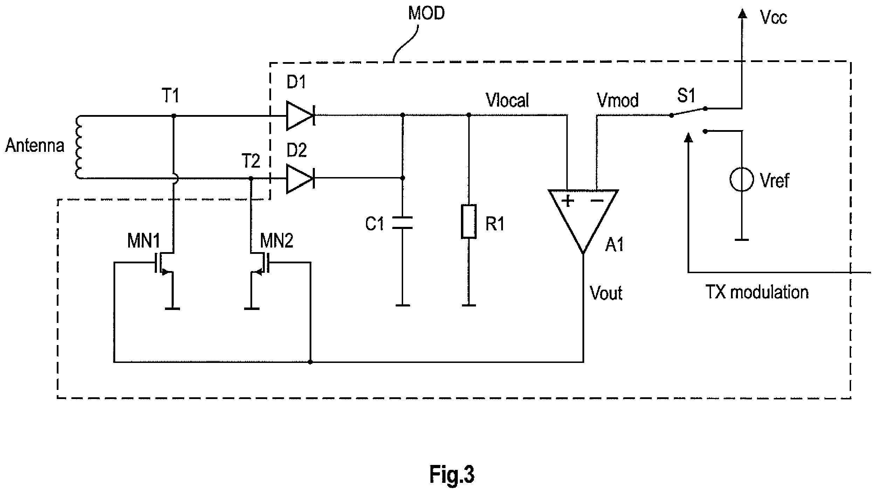

Figure 3 shows the uplink stage of an RFID transponder with modulating circuitry according to the present invention. An antenna Antenna is connected in parallel between two voltage terminals T1 and T2, which are connected to the modulating stage MOD. The terminals T1 and T2 are respectively connected to an local voltage rail Vlocal via a first diode D1 and a second diode D2 so that the diodes D1 and D2 are forward biased in a direction from the antenna Antenna to the local voltage rail Vlocal and are connected in parallel with each other. The diodes D1 and D2 form a simple rectifying circuit for rectifying the voltages from the antenna Antenna to the local voltage rail Vlocal. In other words, this rectifier can be quite simple and even less complex than the rectifier 1 used to derive the internal supply voltage $V_{CC}$ of the transponder from the antenna voltage. Voltage smoothing circuitry is provided for smoothing an output voltage of the diodes D1 and D2 and comprises a capacitor C1 connected between the local voltage rail Vlocal and ground and a resistor R1 also connected between the voltage rail Vlocal and ground, in parallel with the capacitor C1, for buffering the output of the diodes D1 and D2 to provide a smooth DC voltage at the voltage rail Vlocal. The voltage rail Vlocal is connected to the positive input terminal of an amplifier A1.

A reference voltage generator Vref can be connected via a switch S1 to the negative terminal of the amplifier A1. The supply voltage rail Vcc is also connected to the negative terminal of the amplifier A1 via the switch S1. Both the reference voltage generator Vref and the supply voltage Vcc can be connected via switch S1 to the negative terminal Vmod of the amplifier A1. The switch S1 can then be switched between the reference voltage generator Vref and the supply voltage Vcc using the output signal TX modulation of the data control unit 7 shown in Figure 1.

The output terminal Vout of the amplifier A1 is connected to gate terminals of two NMOS transistors MN1 and MN2. The transistors MN1, MN2 provide a regulated load to the antenna Antenna that establishes the back scatter modulation. The transistor MN1 also has its drain terminal connected to the terminal T1 and its source terminal connected to ground, and the transistor MN2 has its drain terminal connected to the terminal T2 and its source terminal connected to ground. The modulating stage MOD includes the diodes D1 and D2, the regulated load transistors MN1 and MN2, the capacitor-resistor arrangement C1 and R1, the amplifier A1 and the reference voltage generator Vref, connected as described above, as well as the switch S1 for switching between the voltage generator Vref and the supply voltage Vcc.

The voltage at the terminals T1 and T2 is rectified by the diodes D1 and D2, which loads the local voltage rail Vlocal with a rectified voltage, buffered by the resistor-capacitor arrangement C1 and R1. The amplifier A1 compares the voltage at Vlocal with the modulation voltage Vmod. The output of the amplifier A1 is then applied to the gates of the transistors MN1 and MN2, which provide a regulated load to the antenna; i.e., to the terminals T1 and T2, in response to the modulation sequence TX modulation. The voltage at the local voltage rail Vlocal is then controlled until it is equal to the either reference voltage level Vref or the supply voltage level $V_{CC}$ dependent on the state of the switch S1.

Since the antenna Antenna is damped with the regulated load, the modulation depth of the circuit remains constant. The modulation index is determined by the antenna limiter threshold and the reference voltage, where

```
m = (limiter threshold - reference voltage)/(limiter threshold
+ reference voltage).
```

The capacitor C1 and resistor R1 smooth the voltage at the voltage rail Vlocal, with the time constant of the smoothing circuitry being chosen such that the voltage at the voltage rail Vlocal follows the antenna voltage envelope quickly enough.

Although the present invention has been described with reference to a particular embodiment, it is not limited to this embodiment and no doubt further alternatives will occur to the skilled person that lie within the scope of the invention as claimed.

**Claims**

1. Modulation circuitry in a RFID transponder including an antenna, for back scatter modulation at an local voltage rail connected to the antenna such that a voltage of the antenna is maintained within a predetermined range said modulation circuitry comprising:

   a voltage regulation loop including a rectifier connected between the antenna and the local voltage rail (Vlocal) for rectifying a voltage from the antenna so as to load the local voltage rail (Vlocal) with the rectified voltage from the antenna;
   an error amplifier (Al) for comparing a voltage at the local voltage rail (Vlocal) with a modulation voltage (Vmod) and producing an output signal (Vout); and
   means for switching the modulation voltage (Vmod) between a first reference voltage level (Vref) and a second reference voltage level, wherein a regulated load is coupled between the output of the error amplifier (Al) and the antenna, such that the regulated load varies in response to the output signal (Vout).

2. The modulation circuitry according to claim 1, wherein the second reference voltage level is the supply voltage level (Vcc).

3. The modulation circuitry according to claim 1 or 2, wherein the regulated load comprises a first damping transistor (MN1) connected between a first antenna terminal (T1) and ground and a second damping transistor (MN2) connected between a second antenna terminal (T2) and ground, with gate terminals of the first and second transistors being connected to the output (Vout) of the amplifier.

4. The modulation circuitry according to any of claims 1-3, wherein a modulation depth of the modulation circuitry is adjusted by varying the first reference voltage (Vref).

5. The modulation circuitry according to any of claims 1-3, wherein the rectifier comprises first and second diodes (D1, D2) connected in parallel with each other in a forward bias direction from the antenna to the local voltage rail.

6. A method of modulating backscatter in an RFID transponder, the method comprising:

   monitoring a rectified voltage level of an antenna at a local voltage rail (Vlocal);
   determining a difference of the rectified voltage level with a modulation voltage level (Vmod);
   varying the modulation voltage level (Vmod) between a first reference voltage level (Vref) and a second reference voltage level (Vcc) in accordance with data to be transmitted; and
   controlling a load coupled to the antenna so as to increase or decrease the load based on the determined difference between the modulation voltage level (Vmod) and the rectified antenna voltage until the rectified voltage level is equal to the modulation voltage level (Vmod).

**Patentansprüche**

1. Modulationsschaltungsanordnung in einem RFID-Transponder, der eine Antenne enthält, um eine Rückstreumodulation an einer Lokalspannungsschiene zu bewerkstelligen, die mit der Antenne verbunden ist, so dass eine Spannung der Antenne in einem vorgegebenen Bereich gehalten wird, wobei die Modulationsschaltungsanordnung Folgendes umfasst:

   eine Spannungsregulierungsschleife, die einen Gleichrichter enthält, der zwischen die Antenne und die Lokalspannungsschiene (Vlocal) geschaltet ist, um eine Spannung von der Antenne gleichzurichten, um dadurch die Lokalspannungsschiene (Vlocal) mit der gleichgerichteten Spannung von der Antenne zu laden;
   einen Fehlerverstärker (Al) zum Vergleichen einer Spannung bei der Lokalspannungsschiene (Vlocal) mit einer Modulationsspannung (Vmod) und zum Erzeugen eines Ausgangssignals (Vout); und
   Mittel zum Schalten der Modulationsspannung (Vmod) zwischen einem ersten Referenzspannungspegel (Vref) und einem zweiten Referenzspannungspegel, wobei zwischen den Ausgang des Fehlerverstärkers (Al) und die Antenne eine regulierte Last geschaltet ist, derart, dass sich die regulierte Last in Reaktion auf das Ausgangssignal (Vout) ändert.

2. Modulationsschaltungsanordnung nach Anspruch 1, wobei der zweite Referenzspannungspegel der Versorgungsspannungspegel (Vcc) ist.

3. Modulationsschaltungsanordnung nach Anspruch 1 oder 2, wobei die regulierte Last einen ersten Dämpfungstransistor (MN1), der zwischen einen ersten Antennenanschluss (T1) und Masse geschaltet ist, und einen zweiten Dämpfungstransistor (MN2), der zwischen einen zweiten Antennenanschluss (T2) und Masse geschaltet ist, umfasst, wobei die Gate-Anschlüsse des ersten und des zweiten Transistors mit dem Ausgang (Vout) des Verstärkers verbunden sind.

4. Modulationsschaltungsanordnung nach einem der Ansprüche 1-3, wobei eine Modulationstiefe der Modulationsschaltungsanordnung durch Verändern der ersten Referenzspannung (Vref) eingestellt wird.

5. Modulationsschaltungsanordnung nach einem der Ansprüche 1-3, wobei der Gleichrichter eine erste und eine zweite Diode (D1, D2) umfasst, die in einer Durchlassvorspannungsrichtung von der Antenne zu der Lokalspannungsschiene zueinander parallel geschaltet sind.

6. Verfahren zum Modulieren einer Rückstreuung in einem RFID-Transponder, wobei das Verfahren Folgendes umfasst:

   Überwachen des Pegels einer gleichgerichteten Spannung einer Antenne bei einer Lokalspannungsschiene (Vlocal);
   Bestimmen einer Differenz zwischen dem Pegel der gleichgerichteten Spannung und einem Modulationsspannungspegel (Vmod);
   Verändern des Modulationsspannungspegels (Vmod) zwischen einem ersten Referenzspannungspegel (Vref) und einem zweiten Referenzspannungspegel (Vcc) in Übereinstimmung mit zu sendenden Daten; und Steuern einer Last, die mit der Antenne gekoppelt ist, um so die Last anhand der bestimmten Differenz zwischen dem Modulationsspannungspegel (Vmod) und der gleichgerichteten Antennenspannung zu erhöhen oder zu erniedrigen, bis der Pegel der gleichgerichteten Spannung gleich dem Modulationsspannungspegel (Vmod) ist.

## Revendications

1.  Circuits de modulation dans un transpondeur RFID comportant une antenne, pour la modulation de rétrodiffusion au niveau d'un rail de tension local connecté à l'antenne de telle sorte qu'une tension de l'antenne soit maintenue dans une plage prédéterminée, lesdits circuits de modulation comprenant:

    une boucle de régulation de tension comportant un redresseur connecté entre l'antenne et le rail de tension local (Vlocal) pour redresser une tension provenant de l'antenne de manière à charger le rail de tension local (Vlocal) avec la tension redressée provenant de l'antenne;
    un amplificateur d'erreur (AI) pour comparer une tension au niveau du rail de tension local (Vlocal) à une tension de modulation (Vmod) et produire un signal de sortie (Vout); et
    un moyen de commutation de la tension de modulation (Vmod) entre un premier niveau de tension de référence (Vref) et un second niveau de tension de référence, dans lequel une charge régulée est couplée entre la sortie de l'amplificateur d'erreur (AI) et l'antenne, de telle sorte que la charge régulée varie en réponse au signal de sortie (Vout).

2.  Circuits de modulation selon la revendication 1, dans lesquels le second niveau de tension de référence est le niveau de tension d'alimentation (Vcc).

3.  Circuits de modulation selon la revendication 1 ou 2, dans lesquels la charge régulée comprend un premier transistor d'amortissement (MN1) connecté entre une première borne d'antenne (T1) et la masse et un second transistor d'amortissement (MN2) connecté entre une seconde borne d'antenne (T2) et la masse, les bornes de gâchette des premier et second transistors étant connectées à la sortie (Vout) de l'amplificateur.

4.  Circuits de modulation selon l'une quelconque des revendications 1 à 3, dans lesquels une profondeur de modulation des circuits de modulation est ajustée en faisant varier la première tension de référence (Vref).

5.  Circuits de modulation selon l'une quelconque des revendications 1 à 3, dans lesquels le redresseur comprend des première et seconde diodes (DI, D2) connectées en parallèle dans un sens de polarisation directe depuis l'antenne vers le rail de tension local.

6.  Procédé de modulation de rétrodiffusion dans un transpondeur RFID, le transpondeur comprenant:

    le contrôle d'un niveau de tension redressée d'une antenne au niveau d'un rail de tension local (Vlocal);
    la détermination d'une différence du niveau de tension redressée avec un niveau de tension de modulation (Vmod);
    la variation du niveau de tension de modulation (Vmod) entre un premier niveau de tension de référence (Vref) et un second niveau de tension de référence (Vcc) conformément à des données à transmettre; et
    la commande d'une charge couplée à l'antenne de manière à augmenter ou diminuer la charge en fonction de la différence déterminée entre le niveau de tension de modulation (Vmod) et la tension d'antenne redressée jusqu'à ce que le niveau de tension soit égal au niveau de tension de modulation (Vmod).

**Fig.1**

**Fig.2**

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0163743 A2